# EUROPÄISCHE PATENTSCHRIFT

(11) **EP 0 392 308 B1**
(45) Veröffentlichungstag und Bekanntmachung des Hinweises auf die Patenterteilung: **25.08.1993**
(21) Anmeldenummer: 90106262.0
(22) Anmeldetag: 02.04.1990
(51) Int. Cl.: B27B 5/06

(54) **Einrichtung zum programmgesteuerten Buntaufteilen von Werkstückplatten**
Program controlled device for cutting up plates
Dispositif commandé par programme pour le découpage de plaques

(30) Priorität: 10.04.1989 DE 3911639
(43) Veröffentlichungstag der Anmeldung: 17.10.1990
(73) Patentinhaber: Jenkner, Erwin, D-75391 Gechingen (DE)
(72) Erfinder: Jenkner, Erwin, D-75391 Gechingen (DE)
(74) Vertreter: Becker, Maria, Dipl.-Phys.

(56) Entgegenhaltungen:
- AT-B- 385 449
- BE-A- 749 370
- DE-A- 3 020 917
- DE-A- 3 300 351
- DE-A- 3 716 660
- GB-A- 1 428 268
- US-A- 3 826 164

## Beschreibung

Die Erfindung betrifft eine Einrichtung zum programmgesteuerten Buntaufteilen von Werkstückplatten, mit den Merkmalen des Oberbegriffs von Patentanspruch 1.

Eine Einrichtung zum Buntaufteilen ist aus der DE-PS 30 20 917 bekannt. Die dort eingesetzte Aufnahmevorrichtung dient dazu, von einer Anzahl von Werkstückplatten abgetrennte und in Streifen aufgeteilte Kopfteile zu speichern und diese nach Aufteilen der Restplatten zum Queraufteilen der Queraufteilsäge zuzuführen.

Die Aufnahmevorrichtung ist auf der Eingabeseite der Längsaufteilsäge und seitlich von dieser angeordnet. Die Queraufteilsäge ist in Vorschubrichtung der Längsaufteilsäge im Abstand von der Aufnahmevorrichtung angeordnet. Letztere weist einen Übergabetisch auf, der um eine vertikale Schwenkachse um 90° aus einer Sammelstellung in eine Übergabestellung verschwenkbar ist. In der Übergabestellung werden die zuvor gesammelten, in Streifen aufgeteilten Kopfteile, seitlich an der Längsaufteilsäge vorbei, der Vorschubvorrichtung der Queraufteilsäge zugeführt.

Abgesehen davon, dass zur Beschickung der Aufnahmevorrichtung sowie zur Übergabe zuvor gesammelter, aufgeteilter Kopfteile auf die Vorschubvorrichtung der Queraufteilsäge die Vorschubvorrichtungen von Längs- und Queraufteilsäge derart ausgelegt sein müssen, dass sie, je nach gewünschter Schnittfolge, wahlweise jeweils in eine von zwei zueinander senkrechten Richtungen fördern, wird für die Aufstellung der Aufnahmevorrichtung sehr viel Platz benötigt. Dabei erhöht sich der Platzbedarf für die gesamte Einrichtung noch dadurch, dass die Queraufteilsäge zur Längsaufteilsäge seitlich derart versetzt anzuordnen ist, dass vom Übergabetisch der Aufnahmevorrichtung aus Kopfteilstreifen vor die Queraufteilsäge gefördert werden können.

Eine Einrichtung der im Oberbegriff des Patentanspruchs 1 angegebenen Art ist aus der DE-A-33 00 351 bekannt und umfasst eine Längssäge mit einem zugeordneten Vorbereitungstisch und einer Vorschubvorrichtung, die es ermöglicht, ein Plattenpaket in den Bereich der Längssäge vorzuschieben. An die Längssäge schliesst sich in Transportrichtung der Platten bzw. Plattenabschnitte eine Übergabestation an, der eine als Transportvorrichtung wirkende Beschleunigungsstation folgt, welche von der Längssäge von einem Plattenpaket abgetrennte Längsstreifenpakete in eine Paternosterstation mit beispielsweise drei Etagen weiterschiebt.

An diese Paternosterstation, deren einzelne Etagen als Speicher dienen, schliesst sich ein Vorbereitungstisch einer Quersäge an, dem ebenfalls eine Vorschubeinrichtung zugeordnet ist.

Bei dieser bekannten Einrichtung, die eine relativ grosse Aufstellfläche benötigt, müssen die buntaufzuteilenden, längsgesägten Teilstücke stets die Paternosterstation durchlaufen, so dass die Anzahl der gemeinsam zu verarbeitenden Teilstücke auf der Quersäge von der Kapazität der Paternosterstation abhängt.

Bei einer weiteren, aus der DE-A-37 16 660 bekannten Aufteilanlage für plattenförmige Werkstücke schliesst sich an eine Längssäge ein Übergabetisch an, über den entsprechende Werkstückstreifen einem Auflagetisch einer Quersäge zugeführt werden. Im Bereich des Übergabetisches ist im Anschluss an die Längssäge eine Entnahmestation vorgesehen, die eine als Rechen ausgebildete Auflage für schmale Werkstückstreifen aufweist.

Diese Auflage ist an einem Träger befestigt und mit diesem längs eines geschlossenen Weges so verfahrbar, dass die schmalen Werkstückstreifen auf einem Walzenförderer abgelegt werden können, mittels dessen sie seitlich zu einer separaten Säge weggefördert werden.

Der Erfindung liegt nun die Aufgabe zugrunde, eine weitere Einrichtung zum programmgesteuerten Buntaufteilen von Werkstückplatten bereitzustellen, die insbesondere einfach und platzsparend aufgebaut ist und es ermöglicht, dem Auflagetisch der Queraufteilsäge beliebig viele längsgesägte Werkstücke zuzuführen.

Erfindungsgemäss wird diese Aufgabe bei einer Einrichtung der eingangs genannten Art durch die kennzeichnenden Merkmale des Anspruchs 1 gelöst.

Erfindungsgemäss ist also die Aufnahmeeinrichtung der Hubvorrichtung so angeordnet, dass sie, wenn sie in ihre Speicherstellung bewegt wurde, oberhalb der Förderebene zwischen der Längsaufteilsäge und der Vorschubvorrichtung der Queraufteilsäge angeordnet ist. Hierdurch lassen sich die buntaufzuteilenden längsgesägten Teilstücke unterhalb der angehobenen Aufnahmeeinrichtung mittels der Transportvorrichtung dem Auflagetisch der Queraufteilsäge zuführen, ohne dass die zur Speicherung oder Zwischenlagerung der Randstreifen dienende Aufnahmeeinrichtung der Hubvorrichtung den Transport der restlichen buntaufzuteilenden Teilstücke von der Längsaufteilsäge zum Auflagetisch der Queraufteilsäge behindert.

Die hinter der Längsaufteilsäge einzeln anfallenden Randstreifen von einer Anzahl von längs und quer aufzuteilender Werkstückplatten oder Plattenpaketen werden in der Aufnahmeeinrichtung gesammelt und nach dem Buntaufteilen derselben wieder in die Förderebene gebracht, in der sie mittels der Transporteinrichtung aus der Aufnahmeeinrichtung entnehmbar und dem Auflagetisch der Queraufteilsäge gemeinsam zuführbar sind.

Bei der erfindungsgemässen Einrichtung ist also die Hubvorrichtung derart oberhalb der Förderebene angeordnet, dass kein zusätzlicher Aufstellplatz hierfür benötigt wird, wobei gleich zeitig der seitliche Versatz von Längs- und Queraufteilsäge klein gehalten werden kann.

Vorteilhafte Weiterbildungen der Erfindung sind in den Unteransprüchen beschrieben.

In der Zeichnung ist, stark schematisiert, ein Ausführungsbeispiel einer erfindungsgemässen Einrichtung dargestellt. Es zeigen:
- Fig. 1: eine Draufsicht der Einrichtung und
- Fig. 2 - 7: Seitenansichten der Einrichtung zur Veranschaulichung ihrer Arbeitsweise

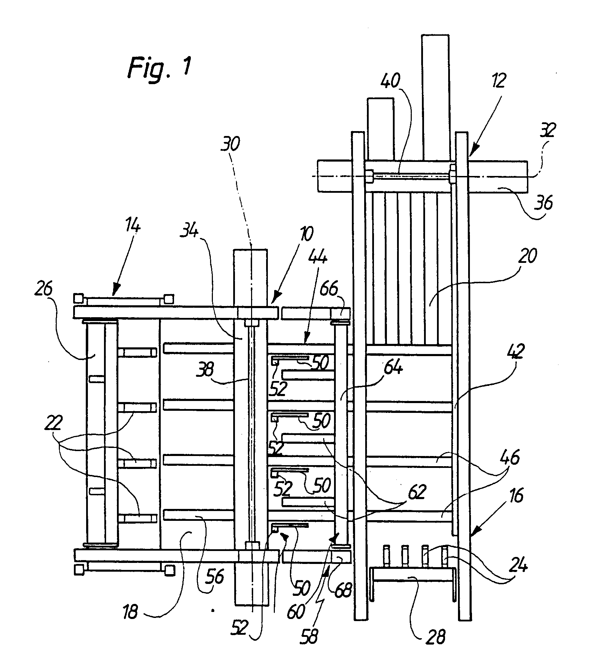

In Fig. 1 bezeichnet als Ganzes 10 eine Längsaufteilsäge, die mit einer Queraufteilsäge 12 verkettet ist. Der Längsaufteilsäge 10 ist eine Vorschubvorrichtung 14 vorgeschaltet, während der Queraufteilsäge 12 eine Vorschubvorrichtung 16 vorgeschaltet ist. Jede dieser beiden Vorschubvorrichtungen weist einen Werkstückaufgabetisch 18 bzw. 20 auf, die mit einem jeweils eine Vielzahl von Spannzangen 22 bzw. 24 tragenden Programmschieber 26 bzw. 28 ausgestattet sind.

Längs- und Queraufteilsäge 10 und 12 sind mit einem entlang einer Trennebene 30 bzw. 32 unter Tisch verfahrbaren Sägeaggregat ausgestattet, dem oberhalb des Maschinentisches 34 bzw. 36 ein anheb- und absenkbarer Druckbalken 38 bzw. 40 zugeordnet ist. Der Werkstückaufgabetisch 20 der Queraufteilsäge 12 ist mit einem Seitenanschlag 42 ausgestattet.

Die Ausbildung von Längs- und Queraufteilsäge 10 und 12 sowie deren vorgeschaltete Vorschubvorrichtungen 14 bzw. 16 sind an sich bekannt und bilden keinen Teil der Erfindung. Es ist deshalb klar, dass diese auch jede andere geeignete Ausbildung aufweisen können.

Zwischen der Längsaufteilsäge 10 und der Vorschubvorrichtung 16 der Queraufteilsäge 12 ist ein als Ganzes mit 44 bezeichneter Zwischentisch vorgesehen, der sich bis zu dem verlängerten Seitenanschlag 42 des Werkstückaufgabetisches 20 erstreckt. Er weist eine Vielzahl von horizontalen und in seitlichem Abstand parallel zueinander angeordneten Auflageleisten 46 auf, die sich bis zu dem über den Werkstückaufgabetisch 20 hinauserstreckenden Seitenanschlag 42 erstrecken.

Der Zwischentisch 44 ist mit einem als Ganzes mit 48 bezeichneten Unterflurförderer ausgestattet, der beispielsweise je Auflageleiste 46 einen entlang derselben geführten Wagen 50 aufweist, an welchen jeweils ein nach oben über die Auflageleisten 46 bzw. die Vorschubebene ausfahrbarer Mitnehmer gehalten ist, die beispielsweise durch die Kolbenstange eines doppelt beaufschlagbaren, pneumatisch arbeitenden Zylinders gebildet sein können.

Der Werkstückaufgabetisch 18 der Vorschubvorrichtung 14 weist gleichfalls eine Vielzahl von fluchtend zu den Auflageleisten 46 angeordneten Auflageleisten 56 auf.

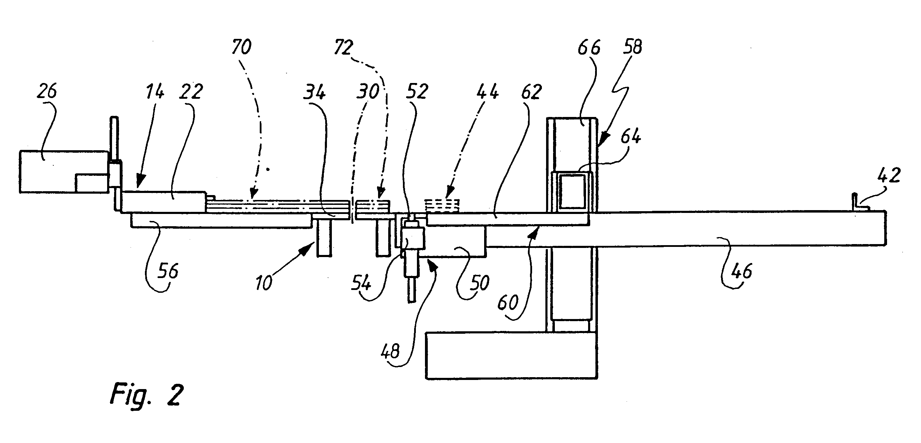

Oberhalb des Zwischentisches 44 und vorzugsweise zwischen der Längsaufteilsäge 10 und der Vorschubvorrichtung 16 ist eine als Ganzes mit 58 bezeichnete Hubvorrichtung vorgesehen, die einen Randstreifenaufnehmer bzw. Randstreifenpaketaufnehmer 60 aufweist, der beispielsweise in Art eines Rechens ausgebildet ist und eine Vielzahl von Aufnahmearmen 62 aufweist, die sich von einer den Zwischentisch 44 übergreifenden Quertraverse 64 in Richtung auf die Längsaufteilsäge 10 erstrecken und sich dabei, in der Draufsicht, jeweils zwischen zwei Auflageleisten 46 des Zwischentisches 44 befinden. Die Quertraverse 64 ist zwischen seitlichen Führungssäulen 66 und 68 programmgesteuert vertikal verstellbar derart, dass in deren unterer Stellung (s. Fig. 2) sich ihre horizontal erstreckenden Aufnahmearme 62 mit ihrer Oberkante in der Vorschubebene a-a befinden.

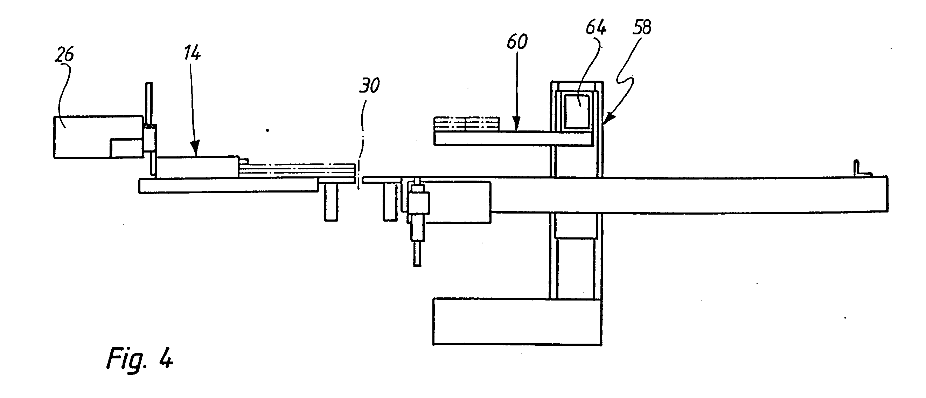

Wie Fig. 4 zeigt, ist der Randstreifenaufnehmer bzw. Randstreifenpaketaufnehmer 60 in eine Stellung oberhalb der Vorschubebene a-a steuerbar, worauf weiter unten im einzelnen noch eingegangen wird.

Die Einrichtung arbeitet folgendermassen:
Es sei angenommen, dass ein erstes Werkstückplattenpaket 70 auf den Werkstückaufgabetisch 18 der Vorschubvorrichtung 14 aufgelegt und durch deren Programmschieber 26 der Längsaufteilsäge 10 programmgemäss zur Durchführung eines Besäumschnittes zugeführt worden ist. Der abgetrennte, schmale Besäumstreifen wurde, was der Einfachheit halber nicht dargestellt ist, durch eine sich nach unten öffnende Klappe hinter dem Maschinentisch 34 abgeführt. In einem weiteren Programmschritt ist anschliessend das Werkstückplattenpaket 70 der Längsaufteilsäge 10 derart zugeführt worden, dass anschliessend nach Festspannen desselben auf dem Maschinentisch 34 mittels des nicht gezeigten Sägeaggregates vom Werkstückplattenpaket 70 ein Randstreifenpaket 72 vorbestimmter Breite abgetrennt werden konnte. Bei diesen Arbeitsoperationen der Längsaufteilsäge 10 befindet sich die Hubvorrichtung 58, gemäss Fig. 2, in ihrer unteren Ausgangsstellung.

Das Randstreifenpaket 72 wird anschliessend mit Hilfe des Programmschiebers 26 durch das Werkstückplattenpaket 70, das zu diesem Zweck in die Längsaufteilsäge 10 hineingeschoben wird, wie in Fig. 2 gestrichelt angedeutet ist, auf die Aufnahmearme 62 des Randstreifenaufnehmers 60 der Hubvorrichtung 58 aufgeschoben. Danach wird das Werkstückplattenpaket 70 wieder in die entgegengesetzte Richtung, gemäss Fig. 2 nach links, transportiert, zugleich wird der Randstreifenaufnehmer 60 in eine Stellung oberhalb der Vorschubebene a-a gesteuert und das Werkstückplattenpaket 70 in der Folge zur Durchführung eines ersten Längsschnittes erneut in der Längsaufteilsäge 10 festgelegt. Nach Durchführung dieses Trennschnittes wird das Werkstückplattenpaket 70 sukzessive in der Längsaufteilsäge 10 aufgeteilt, wobei die dabei anfallenden streifenförmigen Plattenteilstücke unterhalb des Randstreifenaufnehmers 60 auf den Zwischentisch 44 transportiert werden.

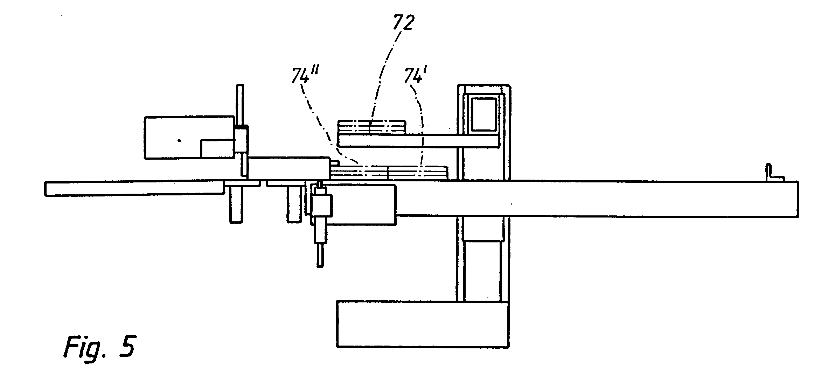

Nach dem Aufteilen des Werkstückplattenpaketes 70 fährt der Programmschieber 26 in seine in Fig. 1 gezeigte Ausgangslage zurück und übernimmt ein weiteres auf dem Werkstückaufgabetisch 18 aufgelegtes Werkstückplattenpaket 74, das, nach Durchführung eines Besäumschnittes, wie vorstehend erläutert, der Längssäge 10 zum Abtrennen eines Randstreifenpaketes 76 zugeführt wird. Ist die entsprechende Sägeoperation ausgeführt, wird dieses Randstreifenpaket 76 durch entsprechendes Vorschieben des restlichen Werkstückplattenpaketes 74 auf den Randstreifenaufnehmer 60 aufgeschoben, wobei es sich an das Randstreifenpaket 72 anreiht. In der Folge wird der Randstreifenaufnehmer 60 wieder in seine Anhebestellung gesteuert (Fig. 4), und das restliche Werkstückplattenpaket 74 wird in einzelne streifenförmige Plattenteilstücke aufgeteilt, die unterhalb des Randstreifenaufnehmers 60 auf den Zwischentisch 44 durch den Programmschieber 26 geschoben werden (s. Fig. 5). Danach werden die Mitnehmer 52 des Unterflurförderers 48 aktiviert, wobei zuvor der Programmschieber 26 wieder in seine Ausgangsstellung zur Übernahme eines weiteren Werkstückstapels zurückgesteuert worden ist. Mit Hilfe des Unterflurförderers werden die streifenförmigen Plattenteilstücke 74′ und 74˝ dann dem Seitenanschlag 42 der Vorschubvorrichtung 16 der Queraufteilsäge 12 zugefördert, nach dem winkeligen Ausrichten in den Spannzangen 24 des Programmschiebers 28 gespannt und der Queraufteilsäge 12 zum Queraufteilen zugeführt. Zuvor wurden in gleicher Weise die gestapelten Plattenteilstücke des Werkstückplattenpaketes 70 in die Queraufteilsäge 12 transportiert.

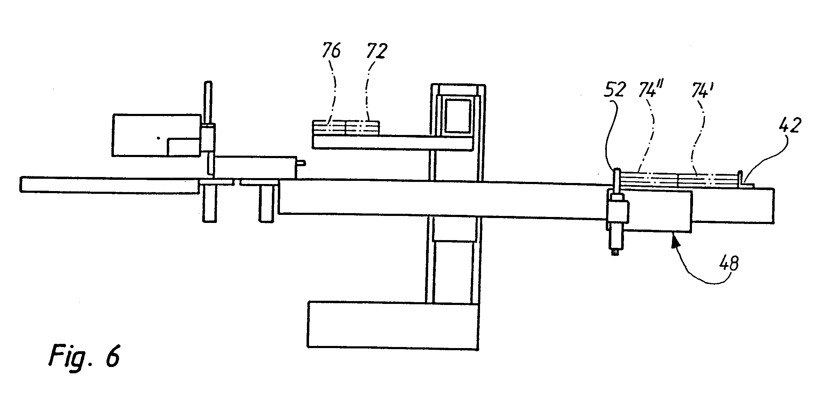

Aus Fig. 6 ist der vorstehend erläuterte Transport der streifenförmigen gestapelten Plattenteilstücke 74′ und 74˝ ersichtlich.

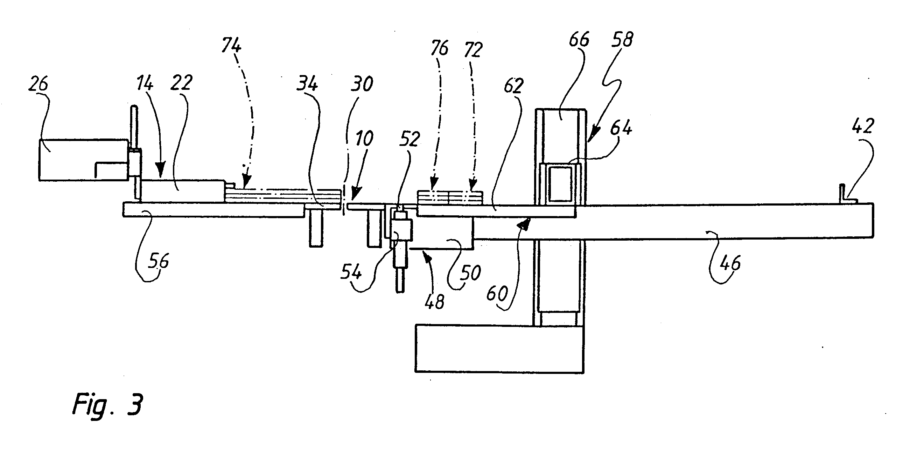

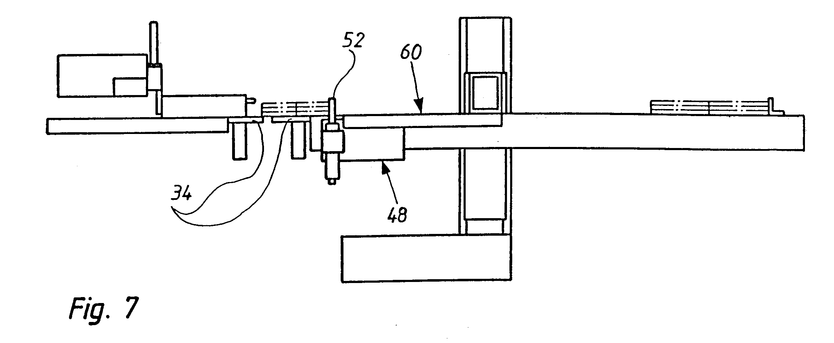

Es sei in diesem Zusammenhang angenommen, dass lediglich zwei Werkstückplattenpakete 70 und 74 aufzuteilen sind. Sobald deshalb gemäss Fig. 6 die gestapelten streifenförmigen Plattenpakete 74′ und 74˝ am Seitenanschlag 72 zur Anlage gebracht sind, wird der Randstreifenaufnehmer 60 in seine in Fig. 7 dargestellte untere Ausgangslage zurückgesteuert, wobei durch die Mitnehmer 52 des Unterflurförderers 48 bei deren Rücksteuerung in ihre Ausgangslage gemäss Fig. 1 die beiden Randstreifenpakete 72 und 76 vom Randstreifenaufnehmer 60 herunter- und auf den Maschinentisch 34 aufgeschoben werden. Danach tauchen die Mitnehmer 52 des Unterflurförderers 48 unter die Vorschubebene a-a ab, der Randstreifenaufnehmer 60 wird in seine Abhebestellung gesteuert, und der Programmschieber 26 schiebt die beiden Randstreifenpakete 72 und 76, wie etwa Fig. 3 zeigt, in eine Stellung rechts von den Mitnehmern 52. Danach werden diese programmgesteuert aktiviert, wobei der Unterflurförderer 48 nunmehr auch die Randstreifenpakete 72 und 76 an den Seitenanschlag 42 zur Anlage bringen wird, bevor sie von den Spannzangen 24 des Programmschiebers 28 erfasst und der Queraufteilsäge 12 zugeführt werden.

Zwischenzeitlich kann der Programmschieber 26 in seine Ausgangslage gemäss Fig. 1 zurückgesteuert und auf den Werkstückaufgabetisch 18 ein weiteres Werkstückplattenpaket aufgegeben werden.

Es können nacheinander so viele Werkstückplattenpakete 70 bzw. 74 aufgeteilt werden, wie von diesen abgetrennte Randstreifenpakete 72 bzw. 76 vom Randstreifenaufnehmer 60 aufgenommen werden können. Danach wird man, wie vorstehend erläutert, das weitere Längsaufteilen eines Werkstückplattenpaketes in der Längsaufteilsäge 10 solange unterbrechen, bis die Randstreifenpakete vom Randstreifenaufnehmer 60 herunter- und an den Seitenanschlag 42 geschoben worden sind. Danach kann das erläuterte Arbeitsspiel zum Beladen des Randstreifenaufnehmers 60 mit Randstreifenpaketen 72, 76 von neuem beginnen.

Eine vorteilhafte Konstruktion des Randstreifenaufnehmers 60 kann auch darin bestehen, diesen so zu gestalten, dass die Randstreifenpakete 72, 76 zur Entnahme vom Randstreifenaufnehmer nicht zuerst gemäss Fig. 7 durch die Mitnehmer 52 nach links und anschliessend durch den Programmschieber 26 wieder in eine Übernahmeposition für die Mitnehmer 52 gemäss Fig. 3 entsprechend weit nach rechts verschoben werden müssen, nachdem zwischenzeitlich der Randstreifenaufnehmer 60 wieder angehoben worden ist. Es ist nämlich eine Konstruktion des Randstreifenaufnehmers 60 denkbar, die es erlaubt, nach dessen Absenken die Randstreifenpakete 72, 76 sofort in Richtung auf den Seitenanschlag 42 mitzunehmen, sofern anstelle der Quertraverse 64 Führungsmittel zur Vertikalführung des Randstreifenaufnehmers 60 gewählt werden, die einem Abschieben nicht im Wege stehen. In diesem Falle könnten die Mitnehmer 52, nachdem die durch Längsaufteilung entstandenen Pakete 74′ und 74˝ an den Seitenanschlag 42 angelegt worden sind, beim Zurückfahren in ihre Ausgangsstellung in die untere Freigabestellung gesteuert werden, so dass sie unterhalb der Randstreifenpakete 72, 76 vorbeibewegt und anschliessend zum Abschieben derselben vom Randstreifenaufnehmer 60 wieder nach oben in ihre Anschlagstellung gesteuert werden könnten.

Die Einrichtung kann gegebenenfalls auch einen anderen Aufbau aufweisen. Wesentlich ist lediglich, dass beim ersten Aufteilvorgang von Werkstückplatten bzw. Werkstückplattenpaketen anfallende Randstreifen bzw. Randstreifenpakete zunächst nicht der Queraufteilsäge 12 zugeführt, sondern gesammelt und erst nach Vorliegen einer bestimmten Anzahl derselben dann gemeinsam der Vorschubvorrichtung einer Queraufteilsäge zugeführt werden.

## Patentansprüche

1. Einrichtung zum programmgesteuerten Buntaufteilen von Werkstückplatten
- mit zwei, jeweils mit einer Vorschubvorrichtung (14, 16) ausgestattete und miteinander verkettete Auflagetische (18, 20) aufweisenden Untertischsägen (10, 12), von denen die eine als Längsaufteilsäge (10) und die andere, ihr rechtwinklig zugeordnet, als Queraufteilsäge (12) dient, und
- mit einer eine Aufnahmeeinrichtung (60) aufweisenden Hubvorrichtung (58) zum Sammeln von Randstreifen (72) oder Randstreifenpaketen, die nach Abtrennen von einer anschließend bunt aufzuteilenden Werkstückplatte bzw. einem Plattenpaket (70) anfallen, wobei die Aufnahmeeinrichtung (60) aus einer Übernahme- und Übergabestellung in eine Speicherstellung und zurück bewegbar ist, und
- mit einer Transportvorrichtung (48) zum Zuführen von längsaufgeteilten Werkstückplatten-Abschnitten zur Queraufteilsäge (12),
**dadurch gekennzeichnet,**
- daß die in ihre Speicherstellung bewegte Aufnahmeeinrichtung (60) oberhalb der Förderebene angeordnet ist, so daß die an der Längsaufteilsäge (10) anfallenden Werkstückplatten-Abschnitte bzw. Paketteilstücke (74', 74'') unterhalb der Aufnahmeeinrichtung (60) der Hubvorrichtung (58) mittels der Transportvorrichtung (48) dem Auflagetisch (20) der Queraufteilsäge (12) zuführbar sind, und
- daß die Randstreifen (72) mittels der Transportvorrichtung (48) aus der in ihre Übernahme- und Übergabestellung bewegten Aufnahmeeinrichtung (60) entnehmbar und dem Auflagetisch (20) der Queraufteilsäge (12) zuführbar sind.

2. Einrichtung nach Anspruch 1, dadurch gekennzeichnet, dass als Transportvorrichtung ein Unterflurförderer (48) vorgesehen ist, der einem zwischen der Längsaufteilsäge (10) und dem Auflagetisch (20) der Queraufteilsäge (12) angeordneten Zwischentisch (44) zugeordnet ist und der über seine Auflagefläche anhebbare Mitnehmer (52) aufweist, und dass auf die in ihrer Übernahme- und Übergabestellung befindliche Aufnahmeeinrichtung (60) der Hubeinrichtung (58) einzelne Randstreifen oder Randstreifenpakete (72, 76) durch nachfolgend anfallende, streifenförmige Plattenteilstücke (74', 74") aufschiebbar, von dieser gemeinsam durch die Mitnehmer (52) herunterschiebbar und der Vorschubvorrichtung (16) der Queraufteilsäge (12) zuführbar sind.

3. Einrichtung nach Anspruch 2, dadurch gekennzeichnet, dass die Mitnehmer (52) des Unterflurförderer (48) zwischen Auflageleisten (46) des Zwischentisches (44) geführt sind, die sich zwischen der Längsaufteilsäge (10) und der Vorschubvorrichtung (16) der Queraufteilsäge (12) erstrecken und im Abstand parallel zueinander angeordnet sind, und dass die Hubvorrichtung (48) als Aufnahmeeinrichtung einen Randstreifenaufnehmer (60) aufweist, durch den in abgesenktem Zustand die gesammelten Randstreifen oder Randstreifenpakete (72, 76) gemeinsam auf die Auflageleisten (46) des Zwischentisches (44) ablegbar sind, wonach sie mittels der Mitnehmer (52) des Unterflurförderers (48) einem Seitenanschlag (42) der Vorschubvorrichtung (16) der Queraufteilsäge (12) zuförderbar sind.

## Claims

1. Device for the program-controlled cutting-up of workpiece plates
- with two saws (10, 12) arranged below tables and comprising supporting tables (18, 20) which are linked to one another and are each equipped with a feeding device (14, 16), one of said saws serving as longitudinal cutting-up saw (10) and the other one, extending at right angles to the latter, serving as transverse cutting-up saw (12), and
- with a lifting device (58) comprising a pick-up device (60) for collecting edge strips (72) or packs of edge strips severed from a workpiece plate or pack of plates (70) which is to be cut up subsequently, said pick-up device (60) being movable from a takeover and transfer position to a storage position and back, and
- with a transporting device (48) for feeding longitudinally cut-up workpiece plate sections to said transverse cutting-up saw (12),
characterized in that
- said pick-up device (60) moved into its storage position is arranged above the conveying plane so that said workpiece plate sections or portions of packs (74', 74'') produced at said longitudinal cutting-up saw (10) are feedable below said pick-up device (60) of said lifting device (58) by said transporting device (48) to said supporting table (20) of said transverse cutting-up saw (12), and in that
- said edge strips (72) are removable by said transporting device (48) from said pick-up device (60) moved into its takeover and transfer position and are feedable to said supporting table (20) of said transverse cutting-up saw (12).

2. Device as defined in claim 1, characterized in that an underfloor conveyor (48) is provided as transporting device, said underfloor conveyor being associated with an intermediate table (44) arranged between said longitudinal cutting-up saw (10) and said supporting table (20) of said transverse cutting-up saw (12) and comprising drivers (52) raisable above its supporting surface, and in that individual edge strips or packs of edge strips (72, 76) are pushable onto said pick-up device (60) of said lifting device (58) in its takeover and transfer position by following strip-shaped plate portions (74', 74''), are jointly pushable down from it by said drivers (52) and conveyable to said feeding device (16) of said transverse cutting-up saw (12).

3. Device as defined in claim 2, characterized in that said drivers (52) of said underfloor conveyor (48) are guided between supporting bars (46) of said intermediate table (44) which extend between said longitudinal cutting-up saw (10) and said feeding device (16) of said transverse cutting-up saw (12) and are arranged in parallel spaced relation to one another, and in that said lifting device (48) comprises an edge strip pick-up (60) as pick-up device for depositing in the lowered state the collected edge strips or packs of edge strips (72, 76) jointly on the supporting bars (46) of said intermediate table (44), after which they are conveyable by said drivers (52) of said underfloor conveyor (48) to a side stop (42) of said feeding device (16) of said transverse cutting-up saw (12).

## Revendications

1. Dispositif pour le découpage multiformat, commandé par programme, de plaques à usiner :
- comportant deux scies "sous table" (10, 12) équipées d'un dispositif d'avance (14, 16) et de tables d'appui (18, 20) solidaires mutuellement, scies dont l'une sert de scie de délignage longitudinale (10) et l'autre, disposée pendiculairement à la première, sert de scie de délignage transversal (12), et
- comportant un dispositif de levage (58) présentant un dispositif de réception (60) pour le recueil de bandes de bord (72) ou de paquets de bandes de bord qui se forment après la séparation d'une plaque ou d'un paquet de plaques (70) à usiner et qui sera ensuite divisée, ledit dispositif de réception (60) pouvant se déplacer en un mouvement d'aller et retour d'une position de reprise et de transfert dans une position de stockage, et
- comportant un dispositif transporteur (48) pour amener vers la scie de délignage transversal (12) des sections de plaque ayant subi le délignage longitudinal,
caractérisé en ce que
- le dispositif de réception (60) déplacé dans sa position de stockage est disposé au-dessus du plan de transport de telle sorte que les sections de plaques parvenant à la scie de délignage longitudinal (10) ou les parties d'un paquet (74', 74") peuvent être amenées, sous le dispositif de réception (60) du dispositif de levage (58), vers la table d'application (20) de la scie de délignage transveral (12) au moyen du dispositif transporteur (48), et
en ce que les bandes de bord (72) peuvent être prélevées au moyen du dispositif transporteur (48) du dispositif de réception (60) qui a été déplacé dans sa position de réception et de transfert, et peuvent être amenées vers la table d'application (20) de la scie de délignage transversal (12).

2. Dispositif selon la revendication 1, caractérisé en ce que, comme dispositif transporteur, est prévu un convoyeur (48) en sous-sol qui est associé à une table intermédiaire (44) disposée entre la scie longitudinale (10) et la table d'application (20) de la scie transversale (12) et qui présente des tocs d'entraînement (52)pouvant être levés sur sa face d'application, et en ce que, sur le dispositif de réception (60) du dispositif de levage (58) se trouvant dans sa position de réception et de transfert, peuvent être poussés des bandes de bord individuelles ou des paquets de bandes de bord (72, 76) sous l'effet de parties (74', 74") de plaques en forme de bandes qui suivent, lesdites bandes de bord ou paquets de bandes (72, 76) pouvant être poussés ensemble vers le bas sous l'effet des tocs d'entraînement (52) et amenés au dispositif d'avance (16) de la scie transversale (12).

3. Dispositif selon la revendication 2, caractérisé en ce que les tocs d'entraînement (52) du convoyeur (48) en sous-sol sont guidés entre des tringles d'appui (46) de la table intermédiaire (44) qui s'étendent entre la scie longitudinale (10) et le dispositif d'avance (16) de la scie transversale (12) et qui sont disposées parallèlement l'une par rapport à l'autre à une certaine distance mutuelle, et en ce que le dispositif de levage (48) présente, pour servir d'installation de réception, un receveur (60) des bandes de bord au moyen duquel les bandes de bord ou les paquets de bandes (72, 76) collectés à l'état abaissé peuvent être déposés ensemble sur les tringles d'application (46) de la table intermédiaire, ces bandes ou paquets de bandes pouvant ainsi être transportés, au moyen des tocs d'entraînement du convoyeur en sous-sol (48), vers une butée latérale (42) du dispositif d'avance 16 de la scie transversale (12).
